Europäisches Patentamt

European Patent Office

Office européen des brevets

(11) Veröffentlichungsnummer: **0 290 914 B1**

(12) # EUROPÄISCHE PATENTSCHRIFT

(45) Veröffentlichungstag der Patentschrift: **04.12.91**

(21) Anmeldenummer: **88107035.3**

(22) Anmeldetag: **02.05.88**

(51) Int. Cl.⁵: **H02M 7/757**, H02J 3/36, H02H 7/26

(54) **Zustandssignalbildung zur Anzeige des Überganges in die Betriebsart "Bypass" bei einer Einrichtung zur Hochspannungsgleichstromübertragung.**

(30) Priorität: **15.05.87 DE 3716351**

(43) Veröffentlichungstag der Anmeldung:
**17.11.88 Patentblatt 88/46**

(45) Bekanntmachung des Hinweises auf die
Patenterteilung:
**04.12.91 Patentblatt 91/49**

(84) Benannte Vertragsstaaten:
**AT DE SE**

(56) Entgegenhaltungen:
**EP-A- 0 227 993**
**EP-A- 0 308 765**
**GB-A- 1 194 463**

(73) Patentinhaber: **SIEMENS AKTIENGESELL-
SCHAFT**
**Wittelsbacherplatz 2**
**W-8000 München 2(DE)**

(72) Erfinder: **Wild, Georg**
**Zedernstrasse 20**
**W-8521 Langensendelbach(DE)**
Erfinder: **Kohler, Rembert**
**Ammanstrasse 7**
**W-8500 Nürnberg(DE)**
Erfinder: **Weibelzahl, Manfred, Dipl.-Ing.**
**Eichenweg 10**
**W-8525 Uttenreuth-Weiher(DE)**
Erfinder: **Haushofer, Martin**
**Zum Kesselgraben 1**
**W-8500 Nürnberg(DE)**
Erfinder: **Messner, Johann**
**Langfeldstrasse 17**
**W-8520 Erlangen(DE)**

## Beschreibung

Die Erfindung betrifft ein Verfahren zur Bildung eines Zustandssignales, welches nach Unterbrechung der normalen Kommutierungsfolge in einem der als Gleich- bzw. Wechselrichter wirkenden Stromrichter an den Enden einer Hochspannungsgleichstrom-Übertragungsstrecke ("HGÜ"-Strecke) die erfolgreiche Kommutierung des Gleichstromes auf ausgewählte Stromrichterventile anzeigt, die einen Gleichstromfluß unter Umgehung der mit dem Stromrichter verbundenen Seite eines Stromrichtertransformators ermöglichen ("Bypass"-Betrieb). Ferner wird eine besonders vorteilhafte Vorrichtung zur Durchführung des erfindungsgemäßen Verfahrens angegeben.

Hochspannungsgleichstrom-Übertragungsstrecken ("HGÜ"-Strecken) sind an beiden Enden mit Stromrichtern abgeschlossen, welche wiederum über Stromrichtertransformatoren an je ein in der Regel mehrphasiges Wechselstromnetz angekoppelt sind. Dabei arbeitet einer der beiden Stromrichter als Wechselrichter und der andere als Gleichrichter. Insbesondere bei Auftreten eines mehrpoligen Fehlers in einem der über die HGÜ-Strecke miteinander verbundenen Wechselstromnetze kann es vorteilhaft sein, in einem der beiden Stromrichter einen sogenannten "Bypass"-Betrieb einzuleiten. Hierdurch wird das z.B. durch einen zwei-oder dreipoligen Kurzschluß gestörte Wechselstromnetz von der einen Seite der HGÜ-Strecke abgetrennt. Der Gleichstromfluß in der HGÜ-Strecke kann somit zumindest noch für eine gewisse Zeit bei reduziertem Sollwert aufrechterhalten werden. In einem solchen Fall wird zwar keine Energie mehr zwischen den Wechselstromnetzen übertragen. Dennoch wird besonders vorteilhaft eine Schnellabschaltung der gesamten HGÜ-Strecke bei einem nur kurzzeitig andauernden Netzfehler, und eine nach Fehlerlöschung dann notwendige, zeitaufwendige und Spannungsschwankungen in den benachbarten Wechselstromnetzen hervorrufende "Anlaufprozedur" vermieden.

Ein weiterer Anwendungsfall für die vorübergehende Einleitung eines Bypasses in einem der Stromrichter ergibt sich z.B. bei der Zuschaltung von Netzfiltern in einem der Wechselstromnetze im Rahmen einer "Anlaufprozedur" der HGÜ-Strecke. Die auf diese Weise erreichte kurzzeitige Entkopplung der beiden über die HGÜ-Strecke verbundenen Wechselstromnetze ermöglicht die zeitkoordinierte Zuschaltung von Netzfiltern und die schnelle Ausregelung der hierdurch auftretenden Blindleistungsschwankungen im jeweiligen Netz. Desweiteren werden durch diese Maßnahme zu starke transiente Netzschwankungen vermieden. Nach Abklingen der durch die Zuschaltung der Netzfilter hervorgerufenen Übergangsvorgänge wird der betroffene Stromrichter in den Normal-Betrieb zurückgeschaltet.

Zur Einleitung eines Bypasses in einem der HGÜ-Stromrichter wird zunächst die normale Kommutierungsfolge der Ventile unterbrochen. Die in ihrem Stromfluß nun nicht mehr abgelösten Ventile ermöglichen aber noch einen Gleichstromfluß durch die mit dem Stromrichter verbundenen Seite des Stromrichtertransformators. Dieser sollte so schnell als möglich unterbrochen werden, um ansonsten im magnetischen Kreis des Transformators in verstärktem Maße auftretende Erscheinungen zu vermeiden, insbesondere Vormagnetisierungen, welche ein schnelles Zurückschalten der HGÜ-Strecke in den Normalbetrieb behindern. Hierzu muß der Gleichstrom durch Zündung mindestens eines ausgewählten Stromrichterventiles von einem der noch stromführenden Ventile wegkommutiert werden. Im betroffenen Stromrichter wird auf diese Weise ein Gleichstromfluß unter Umgehung der mit dem Stromrichter verbundenen Seite des Stromrichtertransformators ermöglicht.

Der Eintritt eines mehrpoligen Fehlers in einem der benachbarten Wechselstromnetze wird durch eine Netzüberwachung nach ca. 5 bis 10 msec erkannt. Ein danach angeforderter Bypass ist bei erfolgreicher Kommutierung des Gleichstromes auf das bzw. die ausgewählten Stromrichterventile ca. nach Ablauf von weiteren 20 msec eingeleitet. In der Praxis besteht dabei allerdings die Gefahr, daß die notwendige Gleichstromkommutierung mißlingt. Eine Ursache hierfür kann in den über den Stromrichtertransformator eingekoppelten gestörten Netzspannungen liegen, welche z.B mit Spannungsüberhöhungen, hochfrequenten Wechselstromanteilen bzw. Gleichgliedern belastet sein können. So muß die erfolgreiche Einleitung bzw. das Ausbleiben eines angeforderten Bypass-Betriebes durch die Bildung eines entsprechenden Zustandssignales überwacht werden, um bei Bedarf rechtzeitig andere Schutzmaßnahmen einleiten zu können, z.B. eine Schnellabschaltung.

Das Verschwinden der zwischen dem jeweiligen Stromrichter und dem dazugehörigen Stromrichtertransformator fließenden Ströme bei erfolgreicher Bypass-Einleitung wird bisher auf recht aufwendige Weise überwacht. Dabei werden den in HGÜ-Anlagen zur Stromerfassung auf der mit dem Stromrichter verbundenen Seite des Stromrichtertransformators vorhandenen Wechselstrom-Hauptwandlern zusätzlich sogenannte "Zwischenwandler" nachgeschaltet. Hierzu sind die Sekundärwicklungen der Wechselstrom-Hauptwandler kurzgeschlossen und versorgen in der Regel mehrere von mit dem Hauptwandler-Sekundärstrom primärseitig durchflossenen und in Reihe angeordneten weiteren Wandlern. Diese sind mit einem Bürdenwiderstand abgeschlossen und im magnetischen Kreis entsprechend einem speziell gewünschten Meßzweck gesondert ausgelegt, z.B. zur Erzeugung von Regelungssignalen und Signalen zur Ansteuerung von Schutzeinrichtungen. Auch die Zwischenwandler gehören zu dieser Gruppe, und sind zur möglichst linearen Stromerfassung auch im Überstrombereich ausgelegte Wechselstromwandler. Die Summe der Beträge der auf diese Weise erfaßten Ströme wird zur Bypass-Überwachung herangezogen.

Jeder der Haupt- und Zwischenwandler muß dabei so ausgelegt sein, daß die von der Netzseite des jeweiligen Stromrichtertransformators herübergekoppelten und in der Regel mit transienten Gleichanteilen überlagerten Netzströme zumindest für einen bestimmten Zeitraum hinreichend genau abgebildet werden. Dieser Zeitraum sollte mindestens so groß sein, wie er für die erfolgreiche Einleitung des Bypass-Betriebes im Normalfall benötigt wird. Wechselstromwandler dieser Art, die also z.B. neben einem stationären Kurzschlußwechselstrom auch verlagerte Kurzschlußwechselströme mit überlagerten transienten Gleichanteilen mit vollem Informationsgehalt an einer ohmschen Bürde übertragen können, müssen im Wandlerkern und den Wicklungen stark überdimensioniert ausgeführt werden. Dies führt zu großen und kostenaufwendigen Bauformen und unter Umständen recht hohen Bürdenleistungen. Die zur Auslegung solcher Wechselstromwandler dienende Nennüberstromzahl muß unter Berücksichtigung der Zeitkonstante des angeschlossenen Wechselstromnetzes bestimmt werden. Diese Netzzeitkonstante steht aber nicht immer zur Verfügung und ist zudem eine Funktion des aktuellen, variablen Belastungszustandes des Netzes.

Aus der EP 0 227 993 A3, die unter Artikel 54 (3) EPÜ fällt, ist ein Verfahren und eine Vorrichtung zur Generierung einer Hochspannung und eines Starkstromes bekannt. Die Vorrichtung besteht aus Leistungsteilen zur Energielieferung, einem Umrichter mit abschaltbaren Schaltelementen, mit dem die elektrische Energie in einen Erregerstrom umgewandelt wird, einer Spulenanordnung, mit der entsprechend des Erregerstromes magnetische Energie gespeichert werden kann, und eine Bypassanordnung, die elektrisch parallel zur Spulenanordnung geschaltet ist. Außerdem weist diese Vorrichtung eine Steuereinrichtung für die abschaltbaren Schalter des Umrichters auf, der einerseits der gemessene Erregerstrom und andererseits sechs ermittelte Spannungswerte zugeführt werden. Das Verfahren besteht aus folgenden Verfahrensschritten: Den Erregerstrom durch den Umrichter und der Spulenanordnung treiben, solange der Erregerstrom einen Referenzwert nicht überschreitet. Sobald dieser Referenzwert erreicht ist, werden alle Schalter des Umrichters eingeschaltet und nach einer vorbestimmten Zeit alle wieder ausgeschaltet, wodurch der erzeugte Gleichstrom auf die Bypassanordnung kommutiert. Durch diese Kommutierung wird eine hohe Gegenspannung in der Spulenanordnung induziert, der einen Plasma-Starkstrom treibt.

Der Erfindung liegt somit die Aufgabe zugrunde, ein Verfahren und eine einfache Vorrichtung zur Durchführung des Verfahrens anzugeben, wobei direkt aus den auf der kurzgeschlossenen Sekundärseite der Hauptwandler zur Verfügung stehenden Wechselstromsignalen auf einfache Weise ein den erfolgreichen Übergang in die Betriebsart "Bypass" bei einer Einrichtung zur Hochspannungs-Gleichstromübertragung anzeigendes Zustandssignal abgeleitet werden kann.

Die Aufgabe wird gelöst durch den Inhalt des Anspruchs 1. Vorteilhafte Weiterbildungen des erfindungsgemäßen Verfahrens und eine besonders geeignete Vorrichtung zur Durchführung des Verfahrens sind in den Unteransprüchen enthalten.

Mit Hilfe der nachfolgend kurz angeführten Figuren wird die Erfindung näher erläutert. Dabei zeigt

FIG 1 das Prinzipschaltbild einer bekannten Einrichtung zur Hochspannungs-Gleichstromübertragung,

FIG 2 die gemäß dem Schaltbeispiel der FIG 1 zwischen einem der Stromrichter und dem zugehörigen Stromrichtertransformator auftretenden Phasenstromverläufe vor und nach einer erfolgreichen Bypass-Einleitung,

FIG 3 aus den Phasenströmen der FIG 2 gemäß dem erfindungsgemäßen Verfahren abgeleitete Summenströme zur Bildung des Zustandssignales,

FIG 4 eine mit dem Stromrichter verbundene, dreieckförmig geschaltete Wicklung eines Stromrichtertransformators mit Wicklungsstromerfassung,

FIG 5a bis 5d die Bildung von Summenströmen mit unterschiedlichen Gewichtungen bei einem auf der mit dem Stromrichter verbundenen Seite im Dreieck geschalteten Stromrichtertransformator,

FIG 6a, b die Bildung von Summenströmen mit unterschiedlichen Gewichtungen und Nullsystem-Unterdrückung bei einem auf der mit dem Stromrichter verbundenen Seite im Dreieck geschalteten Stromrichtertransformator, und

FIG 7 das Ausführungsbeispiel einer vorteilhaften Vorrichtung zur Durchführung des erfindungsgemäßen Verfahrens.

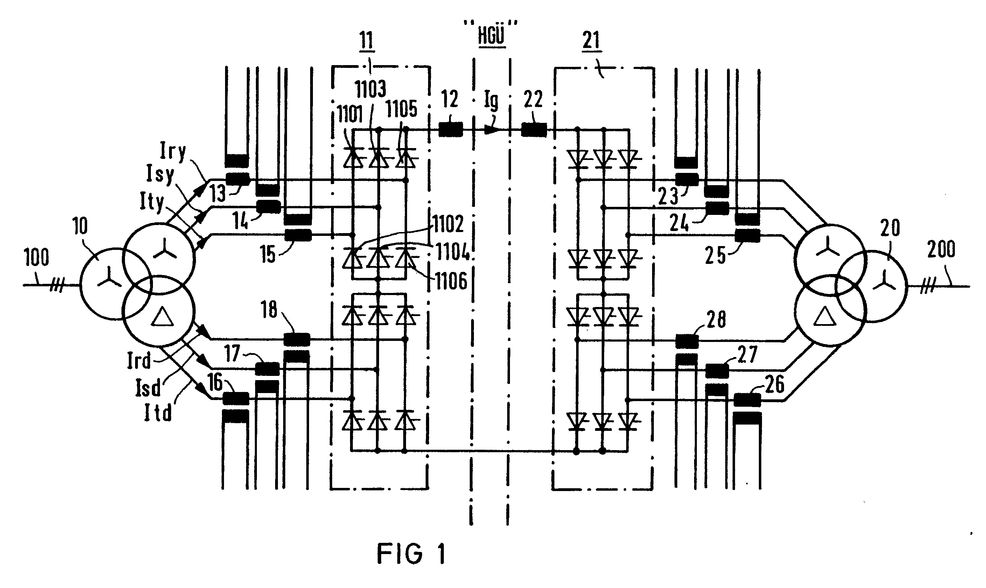

In der FIG 1 ist das Prinzipschaltbild einer bekannten Einrichtung zur Hochspannungs-Gleichstromübertragung dargestellt, welche die beiden Wechselstromnetze 100 und 200 miteinander verbindet. Dabei ist die "HGÜ"-Strecke mit dem Gleichstrom Ig an beiden Enden über je einen Stromrichter 11 bzw. 21 und einen dazugehörigen Stromrichtertransformator 10 bzw. 20 an das jeweilige Netz 100 bzw. 200 angekoppelt. Je nach der gewünschten Richtung der Energieübertragung wirkt einer der beiden Stromrichter als ein Gleichrichter und der andere als ein Wechselrichter. Zur Einspeisung des Gleichstromes in die HGÜ-Strecke können diskrete Zwischenkreisdrosseln 12 bzw. 22 vorgesehen bzw. parasitär vorhanden sein. In der speziellen Schaltung der FIG 1 ist jeder Stromrichter beispielhaft als Reihenschaltung zweier sechspulsiger Drehstrom-Brückenschaltungen ausgeführt, welcher mit je einem stern- bzw. dreieckförmig geschalteten Wicklungssystem auf der einen Seite des dazugehörigen Stromrichtertransformators verbunden ist. Auf diese besonders vorteilhafte Weise wird ein zwölfpulsiger Betrieb der Stromrichter 11 bzw. 21 ermöglicht. In einer anderen möglichen Schaltungsvariante verfügt z.B. jeder Stromrichtertransformator auf der mit dem dazugehörigen Stromrichter verbundenen Seite nur über ein stern- oder dreieckförmig geschaltetes Wicklungssystem. In diesem Fall ist mit einem in Drehstrom-Brückenschaltung ausgeführten Stromrichter nur ein sechspulsiger Betrieb möglich. Zur Erfassung der Ströme auf der mit dem Stromrichter verbundenen Seite des jeweiligen Stromrichtertransformators dienen die Wechselstrom-Hauptwandler 13 bis 18 bzw. 24 bis 28. Dabei werden in der speziellen Ausführung der FIG 1 die Ströme eines jeden Wicklungssystems in Form der jeweiligen Phasenströme erfaßt. Zwischen dem Transformator 10 und dem Stromrichter 11 sind dies beispielsweise die Ströme Iry, Isy, Ity für das sternförmig, und Ird, Isd, Itd für das dreieckförmig geschaltete Wicklungssystem. Ferner ist es auch möglich, bei einem dreieckförmig geschalteten Wicklungssystem direkt die Wicklungsströme zu erfassen.

Soll in FIG 1 z.B. im Stromrichter 11 ein Bypass eingeleitet werden, so wird zunächst die normale Kommutierungsfolge der Ventile unterbrochen, d.h. die bisher stromführenden Ventile werden in der Stromführung nicht mehr abgelöst. Im oberen Teil des Stromrichters 11 seien dies z.B. die Ventile 1103 und 1106.

Zur Einleitung des Bypasses muß der Gleichstrom Ig entweder vom Ventil 1103 auf das ausgewählte Ventil 1105 oder von 1106 auf 1104 kommutiert werden, damit der Gleichstromfluß durch das sternförmig geschaltete obere Wicklungssystem des Stromrichtertransformators unterbrochen wird. Entsprechend muß auf der mit dem dreieckförmig geschalteten Wicklungssystem verbundenen Seite des Stromrichters vorgegangen werden. Zur Überwachung des Verschwindens eines jeden Stromes auf der mit dem Stromrichter verbundenen Seite des Stromrichtertransformators ist eine einfache Addition z.B. aller Phasenströme pro Wicklungssystem des Transformators nicht ausreichend, da ein Summenstromsignal fälschlicherweise bereits durch das sich gegenseitige Aufheben zweier Phasenströme unterschiedlichen Vorzeichens hervorgerufen werden würde.

Werden gemäß der vorliegenden Erfindung dagegen die auf der mit dem Stromrichter verbundenen Seite des Stromrichtertransformators erfaßten Ströme pro Wicklungssystem zunächst mit Gewichtsfaktoren bewertet und dann aufsummiert, so kann bei geeigneter Auswahl der Gewichtsfaktoren ein fehlerhafter Summenstrom mit zyklisch auftretenden Nullbereichen aufgrund von gegenseitiger Stromaufhebung vermieden werden. Aus dem Betrag dieses Summenstromes ist die Bildung eines den erfolgreichen Übergang in den Bypass-Betrieb anzeigenden Zustandssignales Z auf sichere Weise möglich. Hierzu wird eine vorgegebene Zeit nach Anforderung des Bypass-Betriebes der Summenstrombetrag daraufhin überwacht, ob er den Wert Null angenommen hat. Die vorgegebene Zeit ist so auszuwählen, daß der Gleichstrom im Normalfall bei einer erfolgreichen Bypass-Einleitung mit Sicherheit auf das ausgewählte Ventil kommutiert ist und alle Übergangsvorgänge abgeklungen sind, bevor die Überwachung des Summenstrombetrages aktiviert wird. Auf diese Weise wird sichergestellt, daß ein aktives Zustandssignal nur dann ausgelöst wird, wenn jeder einzelne der auf der mit dem Stromrichter verbundenen Seite des Stromrichtertransformators erfaßten Ströme tatsächlich zu Null geworden ist. Die Auswahl der Gewichtungsfaktoren muß so erfolgen, daß bei normaler Kommutierungsfolge der Betrag des Summenstromes keine Nullbereiche hat.

Werden die Ströme auf der mit dem Stromrichter verbundenen Seite des Stromrichtertransformators in Form von Phasenströmen erfaßt, wie dies z.B. in der in der FIG 1 dargestellten Einrichtung der Fall ist, so müssen die Gewichtsfaktoren pro Wicklungssystem unabhängig von dessen spezieller Schaltungsart bei gleichem Vorzeichen unterschiedliche Beträge haben. Besonders vorteilhaft ist es, wenn diese zudem noch ganzzahlig sind.

Werden unter Zugrundelegung der speziellen Schaltung von FIG 1 für die beiden dortigen Wicklungssysteme einheitlich als Gewichtsfaktoren beispielsweise die Werte 1, 2 und 3 ausgewählt, so wird ein aktives Zustandssignal gebildet, wenn gilt

$$|1 \cdot Iry + 2 \cdot Isy + 3 \cdot Ity| +$$
$$|1 \cdot Ird + 2 \cdot Isd + 3 \cdot Itd|$$
$$= \Sigma |Iyd| \neq 0$$

Dabei ist es unerheblich, welchem Phasenstrom welcher der Gewichtsfaktoren 1, 2, 3 zugeordnet wird.

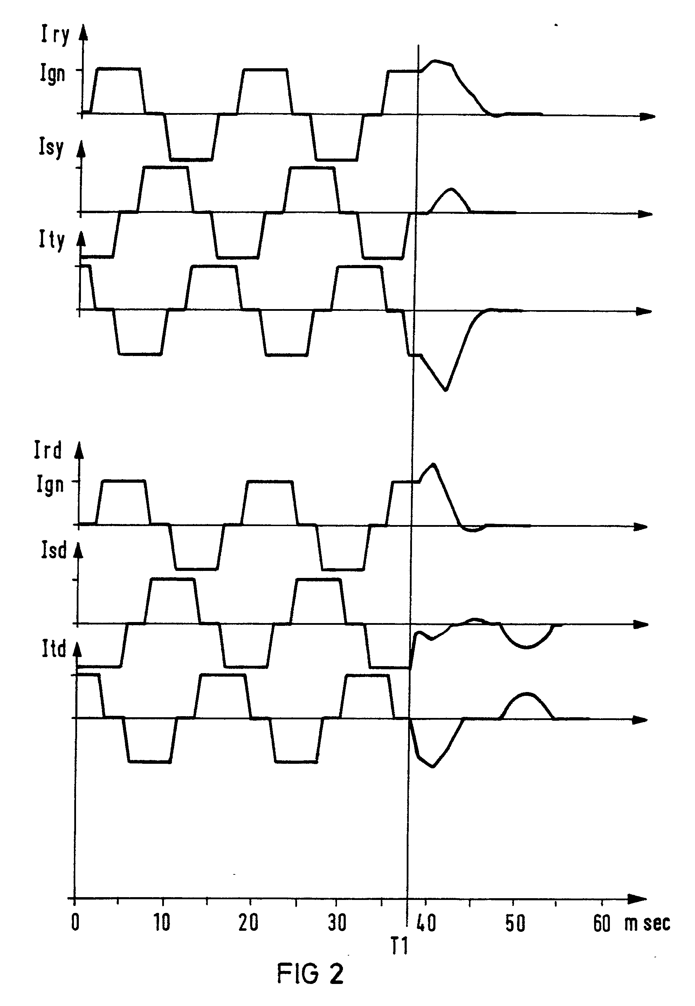

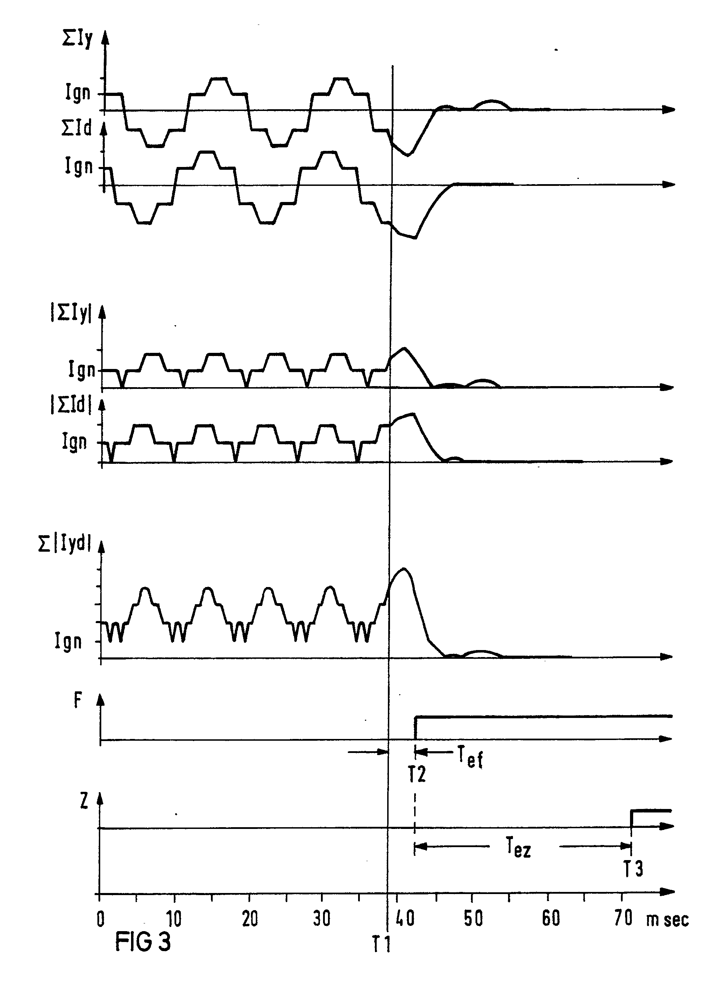

In den Figuren 2 und 3 ist die Bildung eines Zustandssignales Z für dieses Beispiel anhand der Verläufe der Phasenströme übersichtlich dargestellt. Die einzelnen Phasenströme haben dabei eine dem Nennwert des HGÜ-Gleichstromes Ig entsprechende Amplitude Ign. Die Übergänge bei den einzelnen Stromverläufen erfolgen dabei aufgrund der endlichen Kommutierungszeiten nicht sprungartig. Es wird angenommen, daß sich im Zeitpunkt T1 im Wechselstromnetz 100 ein mehrpoliger Fehler ereignet, der die Einleitung eines Bypasses im Stromrichter 11 erforderlich macht.

FIG 2 zeigt hierzu die Verläufe der Phasenströme Iry, Isy, Ity bzw. Ird, Isd, Itd für das sternförmige (y) und dreieckförmige (d) Wicklungssystem des Transformators 10 vor und nach dem Eintritt des Netzfehlers im Zeitpunkt T1. Man erkennt, daß ca. 20 msec danach aufgrund einer erfolgreichen Einleitung des Bypasses alle Phasenströme bis auf Null abgeklungen sind.

In der FIG 3 sind entsprechend dem erfindungsgemäßen Verfahren die aus der Addition der mit Gewichtsfaktoren A, B, C bzw. D, E, F bewerteten Phasenströme gebildeten Summenströme

$$|\Sigma Iy| = |A \cdot Iry + B \cdot Isy + C \cdot Ity|$$
$$|\Sigma Id| = |D \cdot Ird + E \cdot Isd + F \cdot Itd|$$

dargestellt. Unter Berücksichtigung der allgemeinen Bedingungen

$$A \neq B \neq C$$
$$D \neq E \neq F$$

wurden speziell

$$A = D = 1$$
$$B = E = 2$$
$$C = F = 3$$

ausgewählt und die Beträge der Summenströme der beiden Wicklungssysteme zu einem Gesamtsummenstrom

$$\Sigma|Iyd| = |\Sigma Iy| + |\Sigma Id|$$

zusammengefaßt. Schließlich ist die Bildung des Zustandssignales Z im Zeitpunkt T3 eine vorgegebene Zeit Tez nach Anforderung des Bypass-Betriebes dargestellt. Als vorgegebene Zeit Tez wurden in diesem Beispiel ca. 30 msec gewählt. Desweiteren wurde angenommen, daß eine Netzfehlererfassung nach Ablauf einer vom Eintritt des Fehlers im Zeitpunkt T1 gerechneten Erfassungszeit Tef von ca. 8 msec im Zeitpunkt T2 den Bypass-Betrieb durch Ausgabe des Signales F anfordert. Bei einer fehlgeschlagenen Bypass-Einleitung würde das Signal $\Sigma|Iyd|$ abhängig von den ausgewählten Gewichtsfaktorwerten einen Dauergleichstrom anzeigen. Dieser hätte eine Größenordnung von unter Umständen einem Vielfachen des Nennwertes Ign, so daß die Bildung eines aktiven Zustandssignales im Zeitpunkt T3 unterbleiben würde.

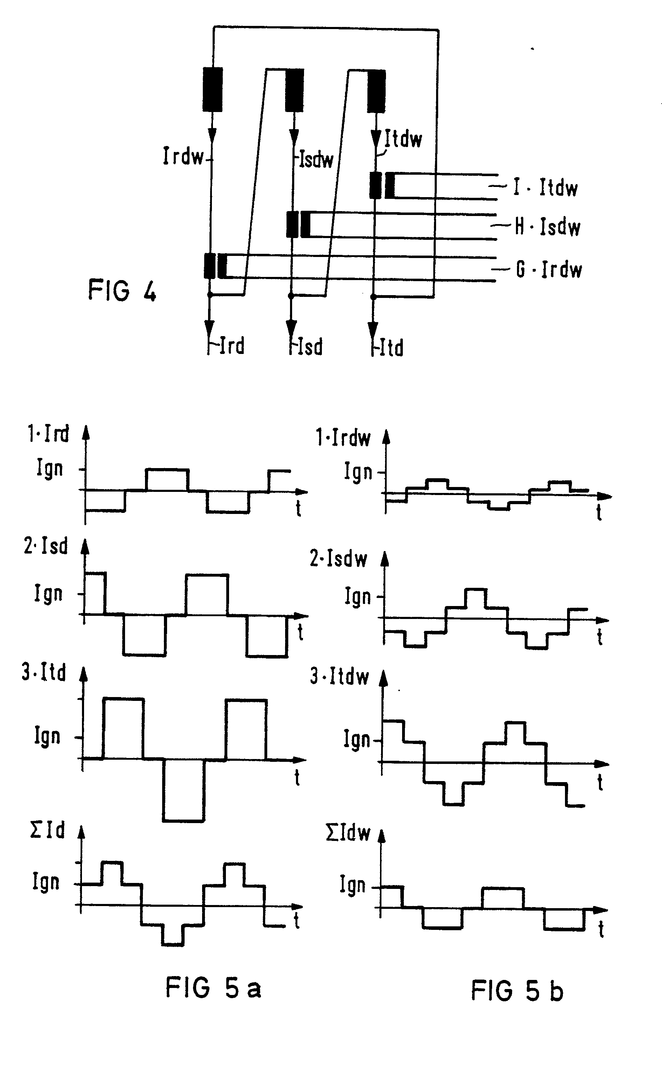

Bei Stromrichtertransformatoren, die über mindestens ein dreieckförmig geschaltetes Wicklungssystem mit dem dazugehörigen Stromrichter bzw. Stromrichterteil verbunden sind, können statt der Phasenströme Ird, Isd, Itd auch die Wicklungsströme Irdw, Isdw, Itdw zum Zwecke der Zustandssignalbildung erfaßt werden. In der FIG 4 ist eine entsprechende Anordnung für ein Wicklungssystem beispielhaft dargestellt. Auch in einem solchen Fall läßt sich mit Hilfe des erfindungsgemäßen Verfahrens durch Zusammenfassung der geeignet gewichteten Wicklungsströme ein Summenstrom bilden, dessen Betrag bei normaler Kommutierung des dazugehörigen Stromrichters keine Nullbereiche hat und somit zur Bildung des gewünschten Zustandssignales Z geeignet ist.

Werden hierzu zunächst die in der FIG 4 eingetragenen Pfeile als Zählpfeile aufgefaßt, so wird ein jeder in deren Richtung fließender Strom als positiv angenommen. Man erkennt, daß im Beispiel der FIG 4 alle Wicklungsstromzählpfeile einheitlich im Gegen-Uhrzeigersinn um das dreieckförmige Wicklungssystem orientiert sind. Desweiteren wurde den in der Reihenfolge der bei Fortschreiten in dieser Richtung auftretenden Wicklungsströmen Irdw, Isdw bzw. Itdw je ein erster, zweiter bzw. dritter Gewichtungsfaktor G, H bzw. I zugeordnet. Unter Berücksichtigung dieser Vereinbarungen läßt sich zeigen, daß die Gewichtsfaktordifferenzen G-H, H-G und I-G unterschiedliche Werte haben müssen, damit der Summenstrom $\Sigma Idw$ entsprechend dem erfindungsgemäßen Verfahren frei von Nullbereichen ist. Natürlich können die Stromzählpfeile für die Wicklungsströme auch im Uhrzeigersinn bzw. nicht gleichmäßig in einer ausgewählten Richtung orientiert werden. In solchen Fällen müssen die Gewichtsfaktordifferenzen vorzeichenmäßig entsprechend an die jeweilige Stromzählpfeilvereinbarung angepaßt werden.

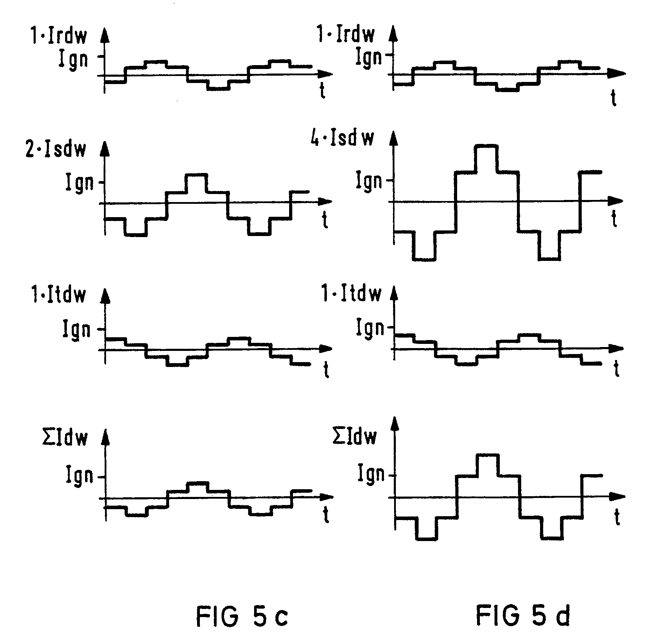

Vorteilhafte und die obigen Bedingungen erfüllende Gewichtsfaktorkombinationen sind speziell bei Verwendung geradzahliger Faktoren beispielsweise die Kombinationen 1,1,2 bzw. 1,1,4. In den Figuren 5c und 5d sind die sich bei der Gewichtung der Wicklungsströme einer Dreieckwicklung mit diesen Kombinationen ergebenden nullbereichsfreien Summenströme $\Sigma Idw$ dargestellt. Wiederum ist es unerheblich, welchem Strom welcher der Faktoren aus der Gewichtsfaktorkombination im einzelnen zugeordnet wird. Zur weiteren Verdeutlichung des erfindungsgemäßen Verfahrens wurden den Darstellungen der Figuren 5c und 5d in den weiteren Figuren 5a und 5b die Gewichtungen der Phasenströme bzw. Wicklungsströme einer Dreieckwicklung mit der Kombination 1, 2, 3 und die daraus resultierenden Summenströme gegenübergestellt. Der Einfachheit halber sind die Übergänge bei den einzelnen Stromverläufen unter Annahme annähernd verschwindender Kommutierungszeiten sprungartig dargestellt. Während die Gewichtung der Phasenströme Ird, Isd, Itd der Dreieckwicklung mit der Kombination 1, 2, 3 zu einem nullbereichsfreien Summenstrom führt, ist dies bei der Gewichtung der Wicklungsströme gemäß der FIG 5b nicht mehr der Fall.

Durch Einsetzen der Faktoren 1, 2, 3 in die oben angegebenen Gewichtsfaktordifferenzen ergibt sich

mit $G = 1$, $H = 2$, $I = 3$ :

$$G - H = 1 - 2 = -1$$
$$H - I = 2 - 3 = -1$$
$$I - G = 3 - 1 = 2$$

Man erkennt, daß in diesem Beispiel zwei Gewichtsfaktordifferenzen einen gleichen Wert haben, die Kombination 1, 2, 3 somit für eine Gewichtung von Wicklungsströmen bei einem dreieckförmig geschalteten Wicklungssystem nicht geeignet ist und aus diesem Grund einen für die Bildung des gewünschten Zustandssignales unbrauchbaren Summenstrom mit Nullbereichen hervorruft.

Werden Stromrichtertransformatoren ohne zusätzliche Ausgleichswicklung ausgeführt, die über ein im Dreieck geschaltetes Wicklungssystem mit dem Stromrichter verbunden sind, so können im Wicklungsdreieck zusätzliche Kreisströme fließen. Diese treten bereits bei einer leichten Unsymmetrie in dem den Stromrichtertransformator speisenden Wechselstromnetz auch bei abgeschaltetem Stromrichter auf. Dieses "Stromnullsystem" wird gerade bei der Bildung des Zustandssignales aus der Summe der gewichteten Wicklungsströme mit erfaßt und kann zu Fehlauslösungen des Zustandssignales führen. Es kann aber auch gemäß dem erfindungsgemäßen Verfahren auf besonders vorteilhafte Weise aus dem Meßergebnis der gewichteten Wicklungsstromsumme eliminiert werden, indem die Gewichtungsfaktoren so ausgewählt werden, daß diese neben unterschiedlichen Werten bei den Gewichtsfaktordifferenzen zusätzlich in der Summe den Wert Null ergeben.

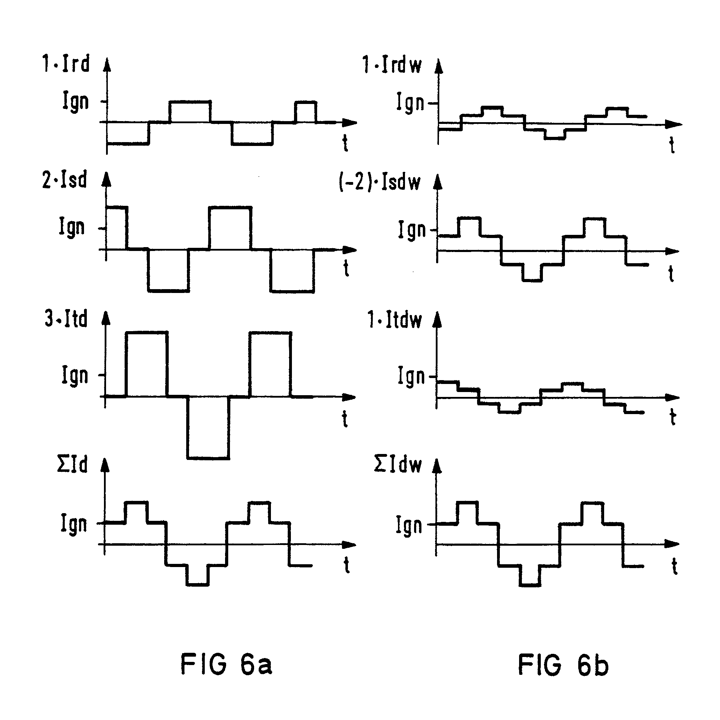

Eine mögliche Gewichtsfaktorkombination, welche beide Bedingungen erfüllt und wiederum vorteilhaft unter Verwendung von ganzen Zahlen gebildet wird, besteht beispielsweise aus den Zahlen 1, 1, -2. In der FIG 6b sind die damit bewerteten Wicklungsströme Irdw, Isdw, Itdw bei einem dreieckförmig geschalteten Wicklungssystem und der sich daraus ergebende nullbereichsfreie Summenstrom ΣIdw dargestellt. Wiederum in Gegenüberstellung sind zusätzlich in der FIG 6a die mit der Faktorkombination 1, 2, 3 bewerteten Phasenströme Ird, Isd, Itd bei einer Dreieckwicklung und der sich dabei ergebende Summenstrom ΣId dargestellt.

Es sind grundsätzlich auch mit ungeradzahligen Gewichtungsfaktoren gebildete Kombinationen möglich, so lange die zur Erreichung eines nullbereichsfreien Summenstromes an die Auswahl der Gewichtungsfaktoren zu stellenden Bedingungen bei Phasen- bzw. Wicklungsstromerfassung eingehalten werden.

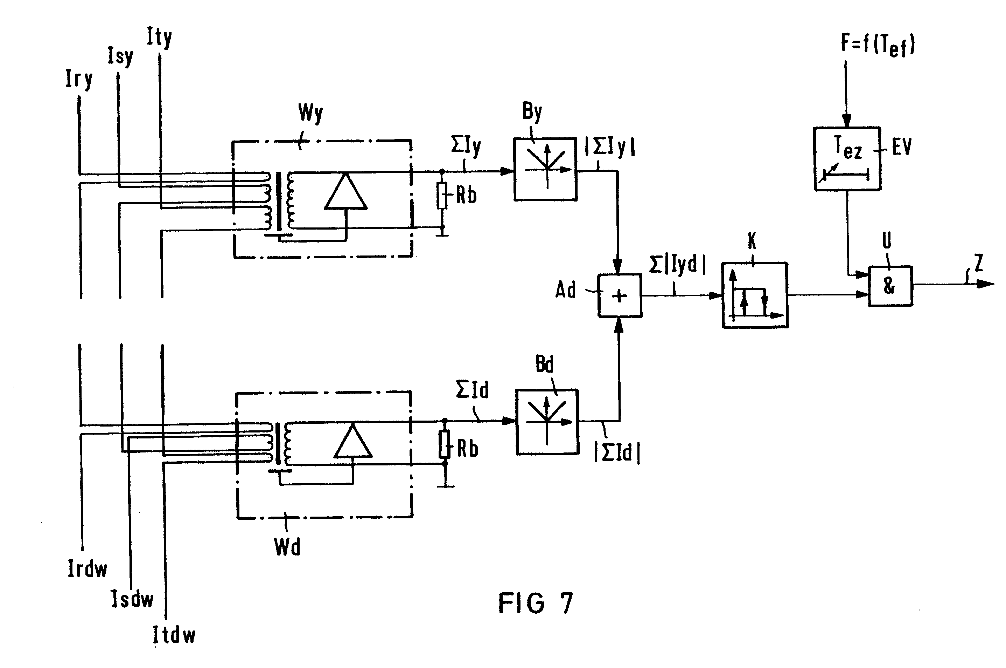

FIG 7 zeigt schließlich eine besonders vorteilhafte Vorrichtung zur Durchführung des erfindungsgemäßen Verfahrens. Dabei wurde angenommen, daß der nicht dargestellte Stromrichtertransformator über je ein stern- und dreieckförmig geschaltetes Wicklungssystem mit dem dazugehörigen Stromrichter verbunden ist. Als Ströme werden beispielhaft auf der sternförmigen Wicklungsseite die Phasenströme Iry, Isy, Ity in der Gewichtung 1, 2, 3 und auf der dreieckförmigen Wicklungsseite die Wicklungsströme Irdw, Isdw, Itdw in der Gewichtung 1,-2, 1 z.B. über Hauptstromwandler erfaßt. Mit Hilfe je eines Gleichstromwandlers Wy bzw. Wd wird in dieser bevorzugten Ausführungsform auf vorteilhafte Weise die gleichzeitige Gewichtung und Zusammemfassung der Ströme pro Wicklungssystem zu den Summenströmen ΣIy und ΣId erreicht, welche an Bürdenwiderständen Rb an den Ausgängen der Wandler anstehen. Diese Gleichstromwandler sind besonders vorteilhaft als Gleichstrom-Hallwandler mit Durchsteckloch ausgeführt, durch welches die die einzelnen Ströme führenden elektrischen Leiter schleifenförmig mit in gewichtungsabhängiger Windungszahl und Windungsrichtung hindurchgeführt sind. An den jeweiligen Gleichstromwandler schließt sich je ein Betragsbildner By bzw. Bd zur Bildung der Beträge der Summenströme ΣIy bzw. ΣId an, welche in einem Addierer Ad zum Gesamtsignal Σ|Iyd| zusammengefaßt werden. Die Mittel zur Bildung des eigentlichen Zustandssignales Z aus diesem Summenstromgesamtsignal aller Wicklungssysteme des Stromrichtertransformators bestehen bevorzugt aus einem Komparator K, einer Einschaltverzögerung EV und einem UND-Glied U. Dabei erzeugt der Komparator K ein aktives binäres Signal, wenn das Summenstromgesamtsignal Σ|Iyd| eine untere Schwelle unterschritten hat. Das Zustandssignal Z wird schließlich am Ausgang des UND-Gliedes erzeugt, welches das Komparatorausgangssignal und ein über die einstellbare Einschaltverzögerung EV um den Zeitraum Tez verzögertes Bypass-Anforderungssignal F zusammenführt. Dieses Anforderungssignal F wird bevorzugt von einer Netzüberwachung erzeugt und steht nach Ablauf der Erfassungszeit Tef nach Eintritt eines die Einleitung eines Bypasses erforderlich machenden Netzfehlers zur Verfügung.

Die erfindungsgemäße Vorrichtung hat den Vorteil, daß insbesondere durch die Verwendung von Gleichstromdurchsteckwandlern die Gewichtung und Zusammenfassung der Ströme pro Wicklungssystem auf besonders einfache Weise möglich ist. Es kann somit auf die Verwendung von zusätzlichen, zum Zwecke der Übertragung von Gleichstromtransienten magnetisch überdimensionierten Zwischenwandlern und auf je eine nachgeschaltete separate Betragsbildung für jeden der zu erfassenden Ströme verzichtet werden.

**Patentansprüche**

1. Verfahren zur Bildung eines Zustandssignales (Z), welches nach Unterbrechung der normalen Kommutierungsfolge in einem der als Gleich- bzw. Wechselrichter wirkenden Stromrichter (11 bzw. 21) an den Enden einer Hochspannungsgleichstrom-Übertragungsstrecke ("HGÜ"-Strecke) die erfolgreiche Kommutierung des Gleichstromes ($I_g$) auf ausgewählte Stromrichterventile anzeigt, die einen Gleichstromfluß unter Umgehung der mit dem Stromrichter verbundenen Seite eines Stromrichtertransformators (10 bzw. 20) ermöglichen ("Bypass"-Betrieb), wobei

a) die Ströme auf der mit dem Stromrichter verbundenen Seite des Stromrichtertransformators erfaßt werden ($I_{ry}$, $I_{sy}$, $I_{ty}$ bzw. $I_{rd}$, $I_{sd}$, $I_{td}$ bzw. $I_{rdw}$, $I_{sdw}$, $I_{tdw}$) ,

b) die erfaßten Ströme so untereinander mit Gewichtsfaktoren (A, B, C bzw. D, E, F bzw. G, H, I) bewertet zu einem Summenstrom ($\Sigma\,I$ bzw. $\Sigma\,I_d$ bzw. $\Sigma\,I_{dw}$) zusammengefaßt werden, daß bei normaler Kommutierungsfolge der Betrag des Summenstromes keine Nullbereiche hat,

c) das Zustandssignal (Z) ausgelöst wird, wenn nach Ablauf eines vorgegebenen Zeitraumes ($T_{ez}$) nach Unterbrechung der normalen Kommutierungsfolge und der Zündung der ausgewählten Stromrichterventile der Betrag des Summenstromes Null geworden ist, und

d) der Zeitraum ($T_{ez}$) zumindest so groß vorgegeben wird, wie er für eine erfolgreiche Kommutierung des Gleichstromes ($I_g$) auf die ausgewählten Stromrichterventile benötigt wird.

2. Verfahren nach Anspruch 1, bei dem die Phasenströme ($I_{ry}$, $I_{sy}$, $I_{ty}$ bzw. $I_{rd}$, $I_{sd}$, $I_{td}$) am Ausgang der mit dem Stromrichter verbundenen Seite des Stromrichtertransformators erfaßt werden , **dadurch gekennzeichnet,** daß die Gewichtsfaktoren (A, B, C bzw. D, E, F) der erfaßten Ströme gleiches Vorzeichen haben und unterschiedlich groß sind.

3. Verfahren nach Anspruch 1, mit einem Stromrichtertransformator, der auf der mit dem Stromrichter verbundenen Seite über ein dreieckförmig geschaltetes Wicklungssystem verfügt und bei dem die Wicklungsströme ($I_{rdw}$, $I_{sdw}$, $I_{tdw}$) erfaßt werden , **dadurch gekennzeichnet,** daß bei Vorgabe einheitlich orientierter Zählpfeile für die Wicklungsströme in einer ausgewählten Richtung um das dreieckförmige Wicklungssystem die bei Fortschreiten in dieser Richtung auftretenden Wicklungsströme ($I_{rdw}$, $I_{sdw}$, $I_{tdw}$) mit einem ersten, zweiten bzw. dritten Gewichtsfaktor (G, H, I) bewertet werden, wobei die Differenzen aus dem ersten und zweiten (G - H), zweiten und dritten (H - I), dritten und ersten Gewichtsfaktor (I - G) unterschiedliche Werte haben.

4. Verfahren nach Anspruch 3 , **dadurch gekennzeichnet,** daß die Summe der Gewichtsfaktoren (G + H + I) Null ist.

5. Verfahren nach einem der vorangegangenen Ansprüche mit einem Stromrichtertransformator, der auf der mit dem Stromrichter verbundenen Seite über mehrere Wicklungssysteme verfügt, jedes Wicklungssystem mit einem Teil des Stromrichters verbunden ist und die Stromrichterteile in Reihe geschaltet sind , **dadurch gekennzeichnet,** daß

a) für jedes Wicklungssystem getrennt die erfaßten Ströme gewichtet zu je einem Summenstrom ($\Sigma\,I_y$, $\Sigma\,I_d$, ...) zusammengefaßt werden, und

b) zur Bildung des Zustandssignales (Z) die Beträge der Summenströme der Wicklungssysteme ($\Sigma |I_{yd}|$) zusammengefaßt werden.

6. Verfahren nach Anspruch 5 , **dadurch gekennzeichnet,** daß der Stromrichtertransformator auf der mit dem Stromrichter verbundenen Spannungsseite über je ein stern- bzw. dreieckförmig geschaltetes Wicklungssystem verfügt.

7. Verfahren nach einem der vorangegangenen Ansprüche , **dadurch gekennzeichnet,** daß die Gewichtungsfaktoren ganzzahlig sind.

8. Vorrichtung zur Durchführung des Verfahrens nach Anspruch 1, mit

a) Wechselstromwandlern (13 bis 18 bzw. 23 bis 28), welche die Ströme auf der mit dem Stromrichter verbundenen Seite des Stromrichtertransformators(10 bzw. 20) erfassen, und deren magnetische Kreise so ausgelegt sind, daß diese bei einem Netzfehler die gestörten Ströme und insbesondere deren transienten Gleichanteile zumindest für einen so langen Zeitraum übertragen, wie er für eine erfolgreiche Kommutierung des Gleichstromes auf die ausgewählten Stromrichterventile benötigt wird,

b) Gleichstromwandler (Wy, Wd), welche für jedes Wicklungssystem die erfaßten Ströme zusammenfassen, indem die die Ströme führenden elektrischen Leiter schleifenförmig mit in gewichtungsabhängiger Windungszahl und -richtung durch die Gleichstromwandler geführt sind,

c) Betragsbildner (By, Bd) für die Ausgangssignale der Gleichstromwandler,

d) einen Addierer (Ad) zur Zusammenfassung der Ausgangssignale der Betragsbildner, und

e) Mittel (K, EV, U) zur Bildung des Zustandssignales (Z) aus dem Ausgangssignal ($\Sigma|Iyd|$) des Addierers.

9. Vorrichtung nach Anspruch 8 , **gekennzeichnet durch** Gleichstromwandler, die mit Hallgeneratoren ausgerüstet sind.

## Claims

1. Method for the formation of a state signal (Z) which, after the interruption of the normal commutation sequence in one of the power converters (11 or 21) acting as power rectifier or power inverter, at the ends of a high-voltage direct-current transmission path ("HGÜ"-path) displays the successful commutation of the direct current (Ig) on selected power-converter valves, which enable a direct-current flow with the by-passing of the side of a power-converter transformer (10 or 20) which is connected to the power converter ("Bypass"-operation), whereby

a) the currents on the side of the power-converter transformer which is connected to the power converter are detected (Iry, Isy, Ity or Ird, Isd, Itd or Irdw, Isdw, Itdw),

b) the detected currents, evaluated with weight factors (A, B, C or D, E, F or G, H, I), are combined among one another into a total current ( $\Sigma$ I or $\Sigma$ Id or $\Sigma$ Idw) in such a way that with normal commutation sequence the amount of the total current has no zero regions,

c) the state signal (Z) is released when, after the expiration of a specified period (Tez) after the interruption of the normal commutation sequence and the ignition of the selected power-converter valves, the amount of the total current has become zero, and

d) the period (Tez) is specified to be at least as large as is required for a successful commutation of the direct current (Ig) on to the selected power-converter valves.

2. Method according to claim 1, in which the phase currents (Iry, Isy, Ity or Ird, Isd, Itd) are detected at the output of the side of the power-converter transformer connected to the power converter, characterized in that the weight factors (A, B, C or D, E, F) of the detected currents have the same sign and are of different sizes.

3. Method according to claim 1, having a power-converter transformer which has at its disposal on the side connected to the power converter a winding system connected in triangular manner, and in which the winding currents (Irdw, Isdw, Itdw) are detected, characterized in that with the specification of uniformly oriented counting arrows for the winding currents in a selected direction around the triangular winding system the winding currents (Irdw, Isdw, Itdw), occurring with progression in this direction, are evaluated with a first, second or third weight factor (G, H, I), whereby the differences from the first and second (G - H), second and third (H - I), third and first weight factor (I - G) have differing values.

4. Method according to claim 3, characterized in that the sum of the weight factors (G + H + I) is zero.

5. Method according to one of the preceding claims having a power-converter transformer which has at its disposal several winding systems on the side connected to the power converter, each winding system is connected to a part of the power converter and the power-converter parts are connected in series, characterized in that

a) separately for each winding system the detected currents are combined weighted each into a total current ($\Sigma$ Iy, $\Sigma$ Id, ...), and

b) for the formation of the state signal (Z) the amounts of the total currents of the winding systems ($\Sigma$ |Iyd|) are combined.

6. Method according to claim 5, characterized in that the power-converter transformer on the voltage side connected to the power converter has at its disposal in each case a winding system connected in star manner or triangular manner.

7. Method according to one of the preceding claims, characterized in that the weighting factors are integral.

8. Device for carrying out the method according to claim 1, having

a) alternating-current transducers (13 to 18 or 23 to 28) which detect the currents on the side of the power-converter transformer (10 or 20) connected to the power-converter, and the magnetic circuits of which are laid out in such a way that with a network fault the circuits transmit the disturbed currents and in particular their transient direct components at least for as long a period as is necessary for a successful commutation of the direct current on to the selected power-converter valves,

b) direct-current transducers (Wy, Wd) which combine the detected currents for each winding system, in that the electrical conductors carrying the currents are guided through the direct-current transducers in a loop-shaped manner as well in turn number and direction dependent on weighting,

c) absolute-value generators (By, Bd) for the output signals of the direct-current transducers,

d) an adder (Ad) for the combination of the output signals of the absolute-value generators, and e) means (K, EV, U) for the formation of the state signal (Z) from the output signal ($\Sigma$ |lyd|) of the adder.

9. Device according to claim 8, characterized by direct-current transducers which are equipped with Hall generators.

**Revendications**

1. Procédé pour former un signal d'état (Z), qui, après interruption de la séquence normale de commutation dans un convertisseur statique (11 ou 21) agissant en tant que redresseur ou onduleur, aux extrémités d'une section de transmission à courant continu à haute tension (section "HGÜ"), indique la commutation réussie du courant continu (lg) sur des valves sélectionnées du convertisseur statique, qui permettent le passage d'un flux de courant continu tout en contournant le côté, raccordé au convertisseur statique, d'un transformateur (10 ou 20) du convertisseur statique (fonctionnement "bypass"), et selon lequel

a) les courants (lry, lsy, lty ou lrd, lsd, ltd ou lrdw, lsdw, ltdw) sont détectés sur le côté, raccordé au convertisseur statique, du transformateur de ce dernier,

b) les courants détectés sont additionnés en étant pondérés par des facteurs de pondération (A,B,C ou D,E,F ou G,H,I) pour former un courant somme ($\Sigma$I ou $\Sigma$ld ou $\Sigma$ldw) de

telle sorte que, pour la séquence normale de commutation, l'intensité du courant somme ne possède aucune partie nulle,

c) le signal d'état (Z) est déclenché lorsqu'après l'écoulement d'un intervalle de temps prédéterminé (Tez) après l'interruption de la séquence normale de commutation et après l'amorçage des valves sélectionnées du convertisseur statique, la valeur du courant somme s'annule, et

d) l'intervalle de temps (Tez) est prédéterminé au moins avec une durée nécessaire pour une commutation réussie du courant continu (lg) sur les valves sélectionnées du convertisseur statique.

2. Procédé suivant la revendication 1, selon lequel les courants de phase (lry, lsy, lty ou lrd, lsd, ltd) sont détectés à la sortie du côté, raccordé au convertisseur statique, du transformateur de ce dernier, caractérisé par le fait que les facteurs de pondération (A,B,C ou D,E,F) des courants détectés possèdent le même signe et ont des valeurs différentes.

3. Procédé suivant la revendication 1, selon lequel le convertisseur statique possède un transformateur qui, sur le côté raccordé au convertisseur statique, dispose d'un système d'enroulements branché en triangle et selon lequel les courants (lrdw, lsdw, ltdw) dans les enroulements sont détectés, caractérisé par le fait que, lors de la prédétermination des flèches de comptage orientées uniformément pour les courants dans les enroulements dans une direction choisie autour du système triangulaire d'enroulements, les courants (lrdw, lsdw, ltdw) qui circulent dans les enroulements et apparaissent lorsqu'on progresse dans cette direction, sont pondérés avec des premier, second et troisième facteurs de pondération (G,H,I), les différences entre les premier et second facteurs de pondération (G-H), les second et troisième facteurs de pondération (H-I) et les troisième et premier facteurs de pondération (I-G) ayant des valeurs différentes.

4. Procédé suivant la revendication 3, caractérisé par le fait que la somme des facteurs de pondération (G + H + I) est nulle.

5. Procédé suivant l'une des revendications précédente, selon lequel le convertisseur statique possède un transformateur qui dispose, sur le côté raccordé au convertisseur statique, de plusieurs systèmes d'enroulements, chaque système d'enroulements étant raccordé à une partie du convertisseur statique et les parties du convertisseur statique étant branchées en série, caractérisé par le fait que

a) pour chaque système d'enroulements séparément, les courants détectés sont additionnés en étant pondérés pour former respectivement un courant somme ($\Sigma Iy$, $\Sigma Id$, ...), et

b) pour la formation du signal d'état (Z), les intensités des courants sommes des systèmes d'enroulement ($\Sigma|Iyd|$) sont additionnés.

6. Procédé selon la revendication 5, caractérisé en ce que le transformateur du convertisseur statique dispose, sur le côté de tension raccordé au convertisseur statique, respectivement d'un système d'enroulements branché en étoile ou en triangle.

7. Procédé suivant l'une des revendications précédentes, caractérisé par le fait que les facteurs de pondération sont des nombres entiers.

8. Dispositif pour la mise en oeuvre du procédé suivant la revendication 1, comportant

a) des convertisseurs de courant alternatif (13 à 18 ou 23 à 28), qui détectent les courants présents sur le côté, raccordé au convertisseur statique, du transformateur (10 ou 20) de ce convertisseur et dont les circuits magnétiques sont agencés de manière à transmettre, dans le cas d'un défaut du secteur, les courants perturbés et notamment leurs composantes continues transitoires, au moins pendant un intervalle de temps possédant la durée nécessaire pour une commutation réussie du courant continu sur les valves sélectionnées du convertisseur statique,

b) des convertisseurs de courant continu (Wy, Wd), qui additionnent les courants détectés pour chaque système d'enroulements, par le fait que les conducteurs électriques véhiculant les courants sont raccordés en boucle avec un nombre et un sens des spires, qui dépendent de la pondération, au moyen du convertisseur de courant continu,

c) des dispositifs (By, Bd) servant à former les valeurs absolues des signaux de sortie des convertisseurs de courant continu,

d) un additionneur (Ad) servant à additionner les signaux de sortie des dispositifs de formation des valeurs absolues, et

e) des moyens (K, EV, U) servant à former le signal d'état (Z) formé à partir du signal de sortie ($\Sigma|Iyd|$) de l'additionneur.

9. Dispositif selon la revendication 8, caractérisé par des convertisseurs de courant continu, qui sont équipés de générateur de Hall.

FIG 1

EP 0 290 914 B1

FIG 2

FIG 3

FIG 4

FIG 5 a

FIG 5 b

FIG 5 c            FIG 5 d

FIG 6a

FIG 6b

FIG 7